# EUROPEAN PATENT APPLICATION

(11) **EP 1 355 370 A1**
(43) Date of publication of application: **22.10.2003**
(21) Application number: 02716345.0
(22) Date of filing: 23.01.2002
(51) Int. Cl.: H01M 8/02, H01M 8/10

(54) **POLYMER ELECTROLYTE FILM AND METHOD FOR PREPARATION OF THE SAME, AND SOLID POLYMER TYPE FUEL CELL USING THE SAME**

(30) Priority: 26.01.2001 JP 2001018239
(71) Applicant: TORAY INDUSTRIES, INC., Tokyo 103-8666 (JP)
(72) Inventor: KIDAI, Masayuki, Kusatsu-shi, Shiga 525-0034 (JP); KONO, Shunji, Otsu-shi, Shiga 520-0842 (JP); YOKURA, Miyoshi, Otsu-shi, Shiga 520-0844 (JP); UETE, Takao, Otsu-shi, Shiga 520-0842 (JP)
(74) Representative: Coleiro, Raymond
(86) International application number: JP0200475
(87) International publication number: WO02059996

(57) **Abstract**

The polymer electrolyte membrane (PEM) of the present invention charged with a proton conductor in the collimated pores of a polymer film that is equipped with a plurality of such collimated pores in the direction of the film thickness is characterized with a relative standard deviation (LVar/LAve) equal to or below 0.3 wherein LAve and LVar represent an average value of L, distances between centers of the adjacent collimated pores and the standard deviation thereof, respectively.

In addition, the PEM of the present invention can be prepared by installing a plurality of pores in the polymer film in the direction of the film thickness using photolithography and, subsequently, charging the above collimated pores with a proton conductor.

Such constitution of the present invention can provide PEM with a small size, and improved performance and productivity; and also improvement of cell performance by inhibiting methanol permeation of DMFC that uses methanol as its fuel.

## Description

### Field of the invention

The present invention relates to a polymer electrolyte membrane (PEM), a method of production thereof and a polymer electrolyte type fuel cell (PEFC) using the same.

A fuel cell is an electric power-generating device that is relatively environment friendly due to its low waste-production and high energy-efficiency. Therefore, fuel cells have been receiving wide attention as interest in global environment protection has been recently growing. The fuel cell, when compared with conventional large-scale electric power-generating equipment, is a promising electric power-generating device for relatively small-size distribution electric power-generating equipment and for vehicles such as automobiles and vessels. It is also getting attention for its use as an electric power source for small vehicles and portable units, and expected installation in mobile phones or personal computers as replacement of secondary cells such as Ni-H₂ or lithium ion batteries.

### Background of the invention

A fuel cell is classified according to the electrolyte used, such as polymer electrolyte type fuel cell (PEFC), phosphoric acid type fuel cell (PAFC), solid oxide type fuel cell (SOFC), molten carbonate (electrolyte) type fuel cell (MCFC), alkaline (electrolyte) type fuel cell (AFC) and the like. Among the above, the polymer electrolyte type fuel cell, when compared with others, have characteristics, such as low operational temperature, short warm-up period, easy access to high output power, prospects for downsizing with weight-reduction, high vibration resistance and the like, which make the polymer electrolyte type fuel cell suitable as an electric power source for vehicles and portable units.

In the field of polymer electrolyte type fuel cells, both conventional PEFC using hydrogen gas as fuel and a direct methanol type fuel cell (DMFC), have received attention. When compared with the conventional PEFC, DMFC has a lower output power but has the advantage of longer use hours in a mobile unit for a single charge due to the high energy density that results from use of liquid fuel without a reformer.

A unit of the fuel cell is a cell comprising an anode, a cathode and an electrolyte membrane in between the anode and the cathode, wherein a reaction for electric power generation occurs in the anode; the electrolyte membrane comprises an ion conductor; the anode, cathode and electrolyte membrane are separated by a separator. An electrode consists of an electrode substrate (also called a collector) that accelerates gas diffusion and collects electricity and an electrocatalyst layer that is an actual electrochemical reaction site. For example, the anode of a PEFC produces protons and electrons via a reaction of the fuel such as hydrogen gas on the anode catalyst layer surface, wherein the electrons are conducted toward the electrode substrate and the protons toward PEM. Therefore, an anode is required to have good gas diffusion, electron conductivity and ion conductivity. On the other hand, the cathode produces water on the cathode catalyst layer surface via a reaction among oxidized gas such as oxygen or air, protons conducted from PEM and electrons conducted from the electrode substrate. Therefore, a cathode should have efficient exhaust of the product water as well as good gas diffusion, electron conductivity and ion conductivity.

Among the above PEFCs, DMFC, which uses an organic solvent such as methanol as its fuel, is slightly different from the conventional PEFC. The anode of DMFC produces protons, electrons and carbon dioxide on the anode catalyst layer surface via the reaction of fuel such as methanol solution and the like; wherein the electrons are conducted toward the electrode substrate, the protons toward the polymer electrolyte membrane and the carbon dioxide is exhausted out of the system through the electrode substrate. Therefore, fuel permeability of, for example, methanol solution is also required along with the conventional requirement features for the PEFC anode. On the other hand, the cathode also produces further carbon dioxide and water on the cathode catalyst layer surface, via the reaction between the methanol permeating the electrolyte membrane and the oxidized gas such as oxygen or air, in addition to the same reactions as those in conventional PEFC's. Such reaction in the cathode results in more product water than the conventional PEFC, which brings out the need to exhaust the product water more efficiently.

As mentioned above, DMFC has a problem of crossover as fuel methanol permeates PEM, which lowers the cellular output power and the energy efficiency. Efforts have been made to prevent the crossover of PEM, including lowering concentration of methanol supply to the anode, a novel PEM employing a polymer different from conventional perfluorinated proton exchange membrane, and, further, a method investigating the structure of PEM. The research for the structure of PEM has provided resolutions against the crossover, including PEM whose crossover is inhibited by pressing the swelling of the proton exchanger via charging the collimated pores with the proton exchange resin as an ion conductor. Known examples are U.S. Patent Nos. 5,631,099, 5,759,712 and the like.

On another hand, use of PEFC in portable units requires downsizing and weight-reduction of the cell along with high-performance features in accordance with the electrode structure as described above. To meet such requirements, a cell configuration of the side-by-side structure has been suggested that arranges a pair of cells disposed opposite to each other in the planar direction of PEM, different from the conventional stack cell configuration, in which cells are vertically stacked on PEM. These approaches can be exemplified in techniques described in Japanese Patent Laid-openNo. (Hei) 6-188008, U.S. Patent Nos. 5,861,221, 5,863,672, 5,925,477, 5,952,118, 6,127,058, 5,759,712, and the like.

### Detailed description of the invention

### The goal of the present invention

A fine processing is necessary to make collimated pores in PEM with such pores, but a satisfactory method has not been found so far. Conventionally, multipore films for filtration have been used as PEM with collimated pores, wherein the pores are prepared by breaking polymer chains via radiating particle beams or ions onto the polymer films and chemically etching the weakened areas using alkaline solutions, for example, as described in U.S. Patent Nos. 5,631,099 and 5,759,712. Such processes have led to increased costs because of low productivity of the multipore film production. The processes also had problems such as difficulty to freely control the configuration or the shape of the pores, such as pore diameter, porosity and pore location. In particular, randomly located pores made both passing protons (current density) and catalytic reactions irregular, which caused a lower performance of fuel cells. Furthermore, problems remained with difficult expectation on improvement of proton conductivity, as the porosity could not be increased.

In addition, fuel cells of the above-described side-by-side structure enable an increase of the cell voltage by placing adjacent cells in a series circuit. Connections, then, occur between the anodes and the cathodes located in the opposite sides of the PEM, wherein it is preferable to have a structure which interposes electron conductor through PEM. Such electron conductor through membrane needs a fine processing for downsizing of cells, but a satisfactory method has not been found to date.

The present invention overcomes such problems, and is aimed at providing downsized cheap PEM with high performance by finely processing PEM and improving the productivity, and PEFC and the like, using the same.

### Means to solve the problem

The present invention is featured as follows to overcome the above-described problems.

PEM of the present invention, which is filled with a proton conductor in the collimated pores of a polymer film equipped with a plurality of the above collimated pores in the vertical direction, is characterized with the relative standard deviation (LVar/LAve) equal to or below 0.3, wherein LAve and LVar represent an average value of L distances between centers of the adjacent collimated pores and the standard deviation thereof, respectively.

Also, PEM of the present invention can be prepared by installing a plurality of collimated pores in a polymer film in the direction of the film thickness using photolithography and by subsequent filling with a proton conductor in the above-described collimated pores.

Additionally, PEFC of the present invention is characterized with use of such PEM.

### Brief descriptions of the drawings

Figure 1 is an elevated perspective view of the PEM of the present invention.
Figure 2 is an enlarged plan view of the porous area (1) in the PEM of the present invention.
Figure 3 is a perspective view using scanning electron microscopy (SEM) for a multipore film wherein pores used in the PEM of the present invention are orderly disposed.
Figure 4 is a perspective view using SEM for the multipore film used for conventional PEM.
Figure 5 is an elevated perspective view of a PEM with side-by-side structure of the present invention.
Figure 6 is a cross-sectional view for processing to prepare a fuel cell with the side-by-side structure using the PEM of the present invention.
Figure 7 is an enlarged plan view of the porous area (1) in the PEM of the present invention showing a constant distance between the centers of pores.

### Descriptions of figure references

1: porous area
2: non-porous area
3: collimated pore
4: membrane permeating area
5: electron conductor through membrane
6: proton conductor
7: electrode

### Embodiments of the present invention

Preferable embodiments of the present invention are described as follows.

PEM of the present invention, which is filled with a proton conductor in the collimated pores of a polymer film that is equipped with a plurality of the above collimated pores in the direction of the film thickness, is characterized in that the relative standard deviation (LVar/LAve) is equal to or below 0.3 wherein LAve and LVar represent an average value of L distances between centers of the adjacent collimated pores and the standard deviation thereof, respectively. It is also characterized in that this multipore film is prepared using photolithography.

In the present invention, the collimated pores of the polymer film require the relative standard deviation (LVar/LAve) to be equal to or below 0.3, wherein LAve and LVar represent an average value of L distances between centers of the adjacent collimated pores and the standard deviation thereof, respectively. A center of a collimated pore uses the center of gravity for the pore area. Specifically, L is equal to the center distance for each of three sides of a triangle that has the minimum three sides wherein the sides enclose particular points and also connect the centers of the collimated pores in between. A particular point can be selected from intersection points (whose total is 25 points, that is L of 75), which are made by drawing horizontal and vertical ruled lines with 100 µm apart within a square having a side of 500 µm. For more precise data, the number of the measured points may be appropriately increased. If the relative standard deviation (LVar/LAve) in the center distance L is equal to or above 0.3, the collimated pores are in a condition of not being orderly disposed in the planar direction. The relative standard deviation (LVar/LAve) is preferably equal to or below 0.1. In the case that the center distance between adjacent collimated pores is always the same, that is, zigzag arrangement, the standard deviation LVar being equal to zero leads to the relative standard deviation (LVar/LAve) being zero, which is the most preferable embodiment.

The orderly disposition of the collimated pores in the planar direction enables performance improvement, such as (1) both the conduction of protons (current density) within the electrolyte membrane and the electrode reaction on the catalyst become regular so that the catalyst is efficiently used; and (2) the porosity increases so that the proton conductivity is improved and the like.

The center distances L may be different from one another provided that regular arrangement occurs via combination of a certain number of pores.

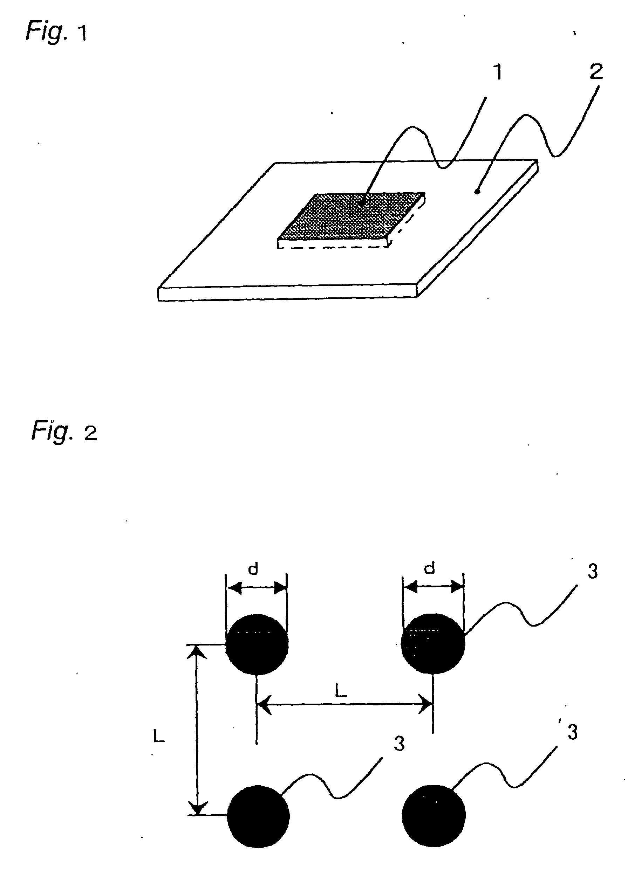

The shape of Figure 1 can be taken as a specific example for the multipore film used in the present invention. Figure 1 is a perspective view of the PEM of the present invention. The center of the multipore film in Figure 1 has the porous area (1) that is bored with a plurality of collimated pores, and the porous area (1) is surrounded by the non-porous area (2) not having pores. Figure 2 shows the enlargement of the porous area. PEM of the present invention is characterized in that the collimated pores in the porous area (3) are placed with disposing pitches at regular intervals in the planar direction as shown in Figure 2. The internal diameter "d" of such collimated pores ranges preferably from 0.1 to 100 µm and particularly preferably from 1 to 50 µm. It is not preferable for the internal diameter d to be less than 0.1 µm or more than 100 µm because it is difficult to charge the proton conductor into the collimated pores. In addition, L, the distance between the centers of the collimated pores, ranges preferably from 0.5 to 100 µm and particularly preferably from 10 to 50 µm.

This central porous area (1) is filled with the proton conductor to show a function as PEM. Although it is known that crossover the fuel methanol permeates from an anode to a cathode is decreased by suppressing the swelling of the proton conductor with the proton conductor filled at the collimated pores, the orderly disposition of the collimated pores (3) in the multipore film of the present invention enables improvement in uniformization of the current density, proton conductivity resulting from the increased porosity, and the decreasing effect of crossover.

The embodiments of the PEM of the present invention are not limited to those illustrated in Figures 1 and 2. The multipore film with orderly disposition used in the PEM can be prepared, for example by photolithography, needle punching and laser beam radiation. Among these, photolithography is particularly preferable from the aspect of processibility.

Conventionally, filter materials with collimated pores have been used in conventional multipore films. These are made by track etch method, breaking polymer chains via radiating ions and chemically etching the weakened area using alkaline solutions to form collimated pores. In contrast, the collimated pores (3) by photolithography enable performance improvement in fuel cells by uniformization of current density and the decreased crossover as pore diameter, shape, distance between the collimated pores, porosity, location of the collimated pores and the porous area can be optionally selected. In addition, the use of photolithography leads to an outstanding outcome that is good for weight-reduction of fuel cells as a fine distinction can be made between the porous area (1) and the non-porous area (2) due to the superiority of the photolithography for fine processing. Photolithography can also achieve a reduction in costs by improvement of productivity, compared with the conventional track etch method.

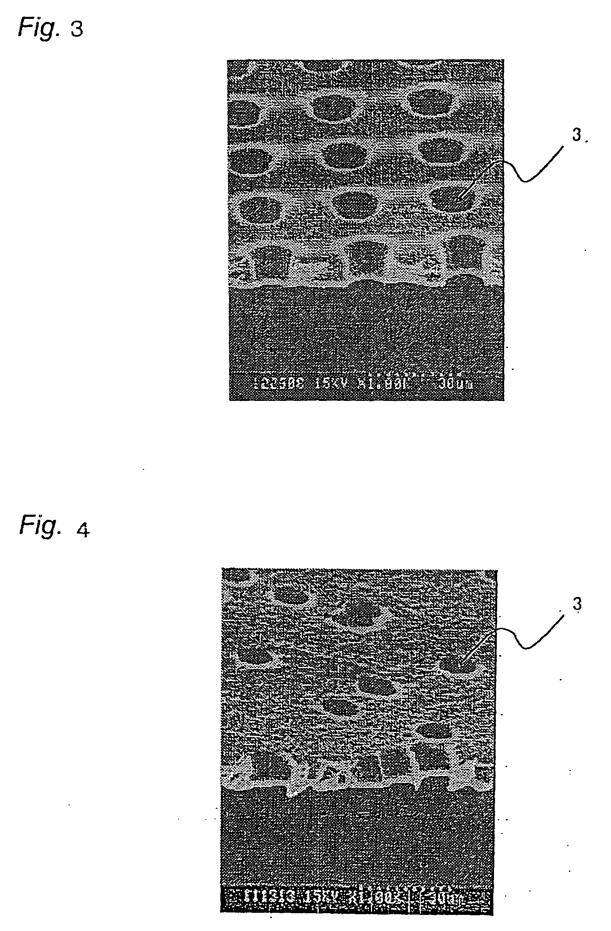

Figure 3 shows a SEM picture for the multipore film prepared by photolithography of the present invention, while Figure 4 shows one prepared by the conventional track etch method. The collimated pores of the multipore film by photolithography of Figure 3 appear clearly to be more orderly disposed at regular intervals, compared with those by track etch of Figure 4.

The shape of collimated pores used in the present invention may be circular, oval, square, rectangular, rhombic, trapezoid or like shapes, although not particularly limited thereto. Among these, a circle or an oval is preferable considering how easy it is to charge a proton conductor and how well the swelling can be inhibited. A size or a distance of the collimated pores is not particularly limited but has to suitably rely upon how easy it is to charge the proton conductor, how good is the cell performance and the like.

The size of the porous area of the porous polymer film used in the present invention has to be in accordance to the size of electrocatalyst layer or of the electrode substrate in use. In addition, although the thickness of polymer film has to be based upon the cell performance in demand, it ranges preferably from 1 to 100 µm and particularly from 5 to 50 µm.

Porosity % (total of collimated pore areas/surface area of a film x 100) of the multipore film used in the present invention is preferably from 5 to 60 % and particularly preferably from 10 to 50 %. Porosities below 5 % and above 60 % result in a lowering of the proton conductivity and of the membrane strength, respectively.

To provide detailed explanations on the photolithography to prepare the multipore film of the present invention, the multipore film can be prepared, for example, by coating a base substrate with photosensitive polymer, radiating the same through photo mask, forming collimated pores by dissolving the polymer after development and exfoliating the polymer from the base substrate. The photosensitive polymer, being either a negative-type or a positive-type, has to be suitably selected according to the size of collimated pores, distance between collimated pores, fuel cell performance in demand and the like. The base substrate is selected according to adherence to polymer or easy exfoliation and uses silicon wafersilicon wafer or aluminum plate, though not limited thereto. Radiation can be either reducing or of the equal magnification radiation but has to be suitably selected in accordance to the size of electrolyte and the size, shape and interval of the collimated pores and the like. Development, dissolution and exfoliation from the base substrate have to rely on the polymer property. It is also possible to coat the base substrate in advance with non-photosensitive polymer and then photoresist on top of the above to prepare pores by radiation, development and polymer dissolution.

The polymers used in the photolithography of the present invention may include, and not particularly limited to, acryl type, silicone type, epoxy type and phenol type, and polyimide or silicone is preferably used for their processibility, oxidization-resistance and strength of polymer.

A specific method of preparing pores by the photolithography using polyimide can involve coating the base substrate with a polyamic acid solution of precursors onto the base substrate, removal of the solution by drying at about 100 °C, formation of collimated pores through photolitho-processing by radiation through a photo mask, development, alkaline treatment and the like, imide cyclization at or above about 300 °C and finally acquiring porous polyimide films by exfoliation from the base substrate. The temperature or the period for the removal of solution and the reaction of imide cyclization has to suitably rely on the polyimide in use. The polyimide films are submerged into acid when exfoliated from the base substrate, wherein hydrofuluoric acid and hydrochloric acid are preferably used for silicon wafersilicon wafer and aluminum, respectively, according to the base substrate in use.

The polyimide of the present invention may be one among negative-type or positive-type photosensitive, or non-photosensitive, wherein the photosensitive polyimide is preferable in terms of size, shape, distance, and film thickness of collimated pores. The negative-type photosensitive polyimide is more preferable.

The multipore films used in the present invention can be used as PEM by charging the pores with a proton conductor. The proton conductor is preferably polymer with a cation exchange functional group (an anionic group) in the side chains of the general polymer. Anionic groups, such as sulfonic acid, phosphoric acid, carboxylic acid and the like, are preferably used, although the type is not particularly limited thereto In addition, the polymer are preferably framed with heat oxidization-resistant materials such as fluorine-containing resins, for example, polytetrafluoro ethylene (PTFE), polytetrafluoroethylene-perfluoroalkylether copolymer (PFA), polytetrafluoroethylene-hexafluoropropylene copolymer (FEP), tetrafluoroethylene-ethylene copolymer (ETFE), polyvinylidene fluoride (PVDF) and the like; polyimide (PI); polyphenylene sulfide sulfon (PPSS); polysulfon (PSF); polyether sulfon (PES); polyphenylenesulfide (PPS); polyphenyleneoxide (PPO); polyether ketone (PEK); polyetherether ketone (PEEK); polybenzoimidazole (PBI); polyphosphazen and the like, although the type is not particularly limited thereto. It is also possible to use styrene type polymer, (meth)acrylic acid type polymer, epoxy type polymer, phenol type polymer and the like. Also, proton exchange resins such as Nafion with a PTEE main chain and a polyperfluoroaklyether sulfonic acid side chain are also preferably used.

The proton conductors used for charging to the multipore films of the present invention are preferably those with restricting molecular chains in the above described anionic group-containing polymers via interpenetrating polymer network (IPN), crosslinking, blend, graft and the like. Examples include IPN through anionic group-containing polymers and other crosslinkable polymers such as organic silane and a high crosslinking through electropolymerization of other crosslinkable polymers into polymer with anioic groups and the like. Furthermore, it is preferable to add inorganic particles, such as phospho tungstric acid, silica, titania, zirconia, fullerene and the like, or inorganic particles with modified surface.

There is no particular limitation to the method of charging the above proton conductor in the multipore films to prepare PEM of the present invention. After dissolving the proton conductive polymer, then it is possible to charge the inside of the pores by coating or submersion of the multipore films with such solution. It is also possible to perform a method of charging the inside of pores with monomers, which are precursors of the proton conductor polymer, and performing polymerization within the pores or plasma polymerization by evaporating the monomers within the pores.

Another preferred embodiment allows the collimated pores to have different sizes of pore diameter on the surface and the opposite sides based on how easily the proton conductor can be charged. Furthermore, collimated pores in different sizes or shapes may be admixed on the same plane. In such case, the ratio of the pore diameters d of the surface and the opposite sides, preferably ranges from 5:1 to 1:1.

Methods of using photolithography in preparing another embodiment of the present invention fuel cell with side-by-side structure, are described below. The side-by-side structure is directed to disposing at least 2 cells that consist of a pair of electrodes opposed to each other in the planar direction of a single PEM. As cells are connected in series circuit by connecting anodes and cathodes of adjacent cells through an electron conductor permeating PEM, cross sections of PEM with the side-by-side structure have an alternating structure between the proton conducting area and the electron conducting area. From the aspect of downsizing and productibility, it is preferable to use the photolithography of the present invention to prepare such structure.

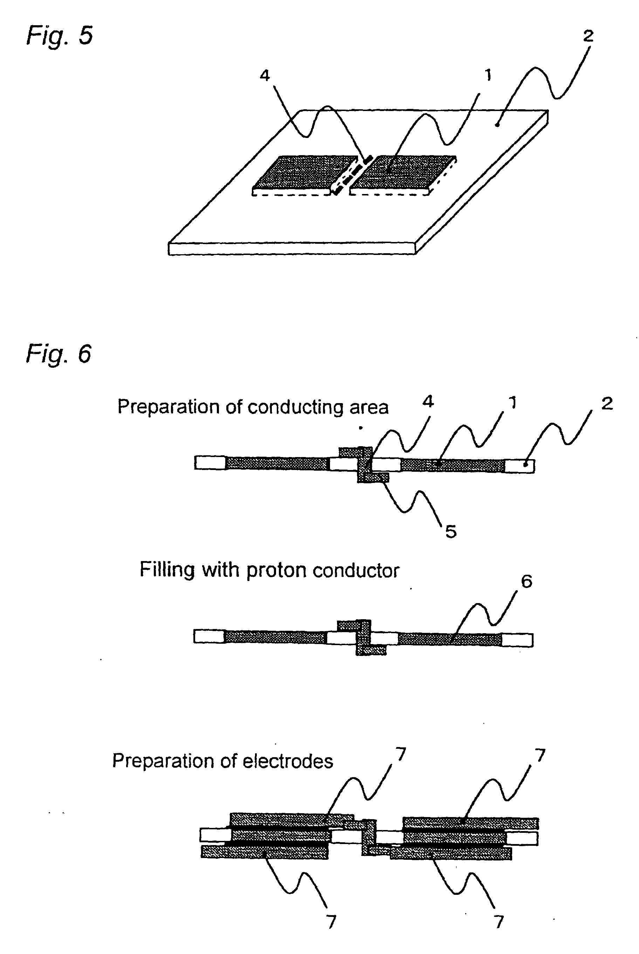

Illustrative examples of the side-by-side structure of the present invention are shown in Figures 5 and 6. Figure 5 is a perspective view of a PEM with the side-by-side structure, and Figure 6 is a cross-sectional view including the processing thereof Although Figures 5 and 6 illustrate a horizontal disposition of two cells, it is also possible to dispose a plurality of at least two cells with the identical side-by-side structure in the planar direction. Two cells are used for simplicity in the following description. In the figures, the proton conducting area is filled with a proton conductor, which is not shown, in porous area (1), and the electron conducting area is filled with an electron conductor through membrane area (4). Areas other than the porous area (1) of the proton conducting area and membrane permeating area (4) of the electron conducting area correspond to the non-porous area (2) that does not conduct protons or electrons, consisting of dense polymer film. Photolithography described in the present invention is suitable for preparing polymer films with such a complex and fine structure. The multipore films represented in Figure 5 are prepared by the photolithography, and PEM is achieved using such films by the method represented in Figure 6. Figure 6 shows that the proton conducting area is filled with the proton conductor following charging of the electron conductor through membrane with the electron conductor, but the order can be reversed. Also, the proton-conducting area may be prepared by charging the proton conductor; electrodes may subsequently be placed; the electron conducting area is finally completed

The electron conducting area in the side-by-side structure of a PEFC of the present invention as described above have the structure through the electrolyte membrane. Herein, the electron conducting area permeating the electrolyte membrane is called the membrane permeating area. This membrane permeating area has a different function from the porous areas that are used for charging the proton conductor. There is no particular limitation for size and shape of the membrane permeating area. The larger the membrane permeating area, the less electric resistance between cells exist so that the voltage increase is expected in the series connection. However, larger membrane permeating areas result in lower performance due to a higher probability that an organic solvent such as hydrogen, methanol and the like in the anodes may leak into the cathode, or that air in the anode may leak into the cathode. Therefore, it is preferable to decide on the size or the shape of the membrane permeating area with consideration of electric resistance and leak-resistance of the electron conductor used in the electron conducting area.

The electron conductor of the above membrane permeating area (4) preferably uses conductive paste, although not particularly limited thereto. The conductive paste can achieve both lowering electron resistance and improving leak-resistance simultaneously because it has a dispersion of conductive agents such as carbon, silver, nickel, copper, platinum, palladium and the like on the polymer. In particular, it is important to prevent the leak of methanol in the DMFC. A self-made conductive paste wherein carbon black, silver, platinum and the like are dispersed on PVDF or polyimide is preferably used as well as commercially available conductive pastes wherein carbon or silver is dispersed on silicone resin, polyester, epoxy resin and the like. The electron conducting area (5) is electrically connected to the electrode substrate or an electrocatalyst layer of a cell and preferably uses the conductive paste to lower such contact resistance.

The electron conducting area (5) can also use metallic foils or wires of nickel, stainless steel, aluminum, copper and the like. It is possible to combine such metallic foils or wires and the conductive paste.

PEM of the present invention is used for PEFC as membrane electrode assembly (MEA) through combination with electrodes (7) consisting of the electrode substrate and the electrocatalyst layer.

In PEFC of the present invention, the electrocatalyst layer in the electrode (7) has no particular limitation but instead it is possible to use what is known in the art. An electrocatalyst layer includes a catalyst required for electrode reactions or electrode activation material and also includes material contributing to electron conduction or ion conduction that enhances electrode reactions. Furthermore, the electrode activation material (material for oxidization or reduction), which is liquid or gas, requires a structure wherein the liquid or the gas easily permeates and the exhaust of product material according to the electrode reaction is also accelerated. In PEFC of the present invention, preferable examples of the electrode activation material include hydrogen, organic solvents such as methanol and the like, and oxygen. Preferable examples of the catalyst include noble metals such as platinum. In addition, it is preferable to include ingredients to improve the conductivity of the electrocatalyst layer, and the shape, preferably but not by way of limitation has conductive particles. Examples of ingredients for improving conductivity include an electron conductor. Carbon black can be an example of the electron conductor, and, in particular, platinum-supported carbon and the like are preferably used as catalyst-supported carbon black. The electron conductor is carbon black, the ion conductor is proton exchange resin, and the reaction product is water. The electrocatalyst layer should have a structure that allows contacts among the catalyst, the electron conductor and the ion conductor, and efficient exit/entrance of the activation materials and the reaction products. In addition, polymer compounds are preferably used in improving the ion conductivity or adherence of ingredients, or in increasing water repellency. The electrocatalyst layer suitably includes at least catalyst particles, conductive particles and polymer compounds.

In PEFC of the present invention, noble metals such as platinum, palladium, ruthenium, iridium, gold and the like are preferably used, and the catalyst included in the electrocatalyst layer can be conventional, but not particularly limited thereto. Also, the electrocatalyst layer may include at least two different elements such as alloys of said noble metal catalysts, a mixture thereof and the like.

Inorganic conductive materials are preferably used, although not limited thereto, for the electron conductor (conducting material) included in the electrocatalyst layer from the aspect of electron conductivity and contact-resistance. Examples of carbon ingredients include carbon black, graphite material and carbon material, or metals or half-metals. Carbon blacks such as channel black, thermal black, furnace black, acetylene black and the like are preferable as such carbon ingredients in terms of the electron conductivity and the specific surface area. Examples of oil furnace black are products of Cabot, Valcan XC-72R, Valcan P, Black Pearls 880, Black Pearls 1100, Black Pearls 1300, Black Pearls 2000, Legal 400 and a product of Ketjen Black-International, Ketjen Black EC and products of Mitshibishi chemicals, # 3150, # 3250 and the like; examples of acetylene black is a product of Denki Kagaku Kogyo Kabushikikaisha, Denka Black. Examples, other than the carbon blacks, further include artificial graphite or carbon that come from organic compounds of natural graphite, pitch, cokes, polyacrylonitrile, phenol resin, furan resin and the like. The form of such carbon ingredients can be particle or fabric. Carbon ingredients processed with some other post-treatment can also be used. Among such carbon ingredients, Valcan XC-72, a product of Cabot, is particularly preferable in terms of the electron conductivity.

Although the amount of these electron conductor additives has to be suitably selected according to the electrode property in demand, the specific surface area of the material in use, electric resistance and the like, ranges preferably from 1 to 80 % and more preferably from 20 to 60 % as weight ratio against that of the electrocatalyst layer. Either too small or too large amounts of the electron conductor leads to a curtailment in the electrode performance as the former results in the lower electric resistance and the latter results in a lowering of gas permeability, catalyst utilization ratio and the like.

The electron conductor and the catalyst particles are preferably dispersed regularly for the electrode performance. Therefore, it is preferable to disperse the catalyst particles and the electron conductor as a coating solution, well in advance.

When the electrocatalyst layer is used for fuel cells, another preferable embodiment is use of catalyst-supported carbon, wherein the catalyst and the electron conductor are unified. The use of this catalyst-supported carbon contributes to a reduction in costs as the efficiency of catalyst utilization ratio improves. It is also possible to add additional conductive agents even when the catalyst-supported carbon is used in the electrocatalyst layer. The above-described carbon black is preferably used as such additional conductive agents.

The ion conductor used in the electrocatalyst layer may be any of what is known in the art, and not particularly limited thereto. Although various kinds of organic and inorganic materials are known in the art as ion conductors, polymers with ion exchange groups, such as sulfonic acid group, carboxylic acid group, phosphoric acid group and the like that improve the proton conductivity, are preferably used when the ion conductor is used in fuel cells. Among these, polymers with a proton exchange group, which consists of a fluoroalkylether side chain and a fluoroalkyl main chain, are preferably used. For examples, products susch as DuPont's Nafion, Asahi Kasei Corporation's Aciplex and Asahi Glass company's Flemion and the like are preferred. Such ion exchange polymers are placed in the electrocatalyst layer in a state of solution or dispersion. A polar solvent is preferable for solvent to dissolve or disperse an ion exchange polymer in terms of solubility of the proton exchange resin, although there are no limitations therein. The solvent may be fluorine-containing polymer as described above that has the proton exchange group, another polymer such as ethylene or styrene, or copolymers or blends thereof.

In terms of the electrode performance, it is preferable to apply the ion conductor in an evenly dispersed state that is achieved by prior addition of the same into the coating solution that is mainly comprised of electrocatalyst particles and electron conductor when preparing the electrocatalyst layer, but the ion conductor may be applied after coating the electrocatalyst layer. Methods of applying ion conductor on the electrocatalyst layer include spray coat, brush coat, dip coat, slot die coat, curtain coat, flow coat and the like although not limited thereto.

The amount of ion conductor included in the electrocatalyst layer has to suitably rely on the electrode property in demand, conductivity of the ion conductor in use and the like; ranges preferably from 1 to 80 % by weight and more particularly from 5 to 50 % by weight, although not particularly limited thereto. Either too small or too large amounts of ion conductor leads to a reduction in the electrode performance as the former results in lower ion conductivity with the latter results in a lowering of gas permeability.

The electrocatalyst layer may contain various materials other than the above described catalyst, electron conductor and ion conductor. In particular, a preferable embodiment includes polymers other than the above-described proton exchange resin for the purpose of improving the adherence of materials included in the electrocatalyst layer. Such polymer can be polymer including fluorine atom, and though not particularly limited, examples can include polyvinyl fluoride (PVF), polyvinylidene fluoride (PVDF), polyhexafluoropropylene (FEP), polytetrafluoroethylene, polyperfluoroalkylvinylether (PFA) and the like or copolymers thereof, and copolymers of these monomer units and other monomers such as ethylene, styrene and the like, blend thereof, and the like. The contents of said polymers in the electrocatalyst layer range preferably from 5 to 40 % by weight. Excess of polymer contents leads to lowering the electrode performance due to the increased electron and ion resistance.

Another preferable embodiment of the electrocatalyst layer is a catalyst-polymer assembly with three-dimensional network micro pore structure. The catalyst-polymer assembly (polymer assembly including the catalyst particles) is characterized with a three-dimensional network micro pore structure. A "three-dimensional network micro pore structure" refers to a state in which the catalyst-polymer assembly is stereoscopically connected in the three-dimensional network structure.

Where the electrocatalyst layer has the three-dimensional network micro pore structure, the diameter of the micro pores ranges preferably from 0.05 to 5 µm and more preferably from 0.1 to 1 µm. The diameters of the micro pores can be calculated as an average of at least 20, preferably at least 100 and conventionally 100 of those from pictures taken with SEM and the like. As the electrocatalyst layer with the micro pore structure of the present invention prepared by wet coagulation method has a broad distribution of the micro pore diameters, it is preferable to calculate the average from as many pore diameters as possible.

Porosity of the three-dimensional network micro pores preferably ranges from 10 to 95 %. More preferably it ranges from 50 to 90 %. Porosity is defined as a percentage (%) as follows: the total volume of the electrocatalyst layer subtracted with the volume of the catalyst-polymer assembly and divided by the total volume of the electrocatalyst layer. The electrocatalyst layer undergoes wet coagulation following coating on the electrode substrate, proton exchange membrane and other substrates, but if the porosity cannot be calculated from the electrocatalyst layer itself, porosity of the electrode substrate, proton exchange membrane and other substrates are calculated in advance. Total porosity of the electrocatalyst layer and electrode substrate, proton exchange membrane and other substrates are calculated, and then the porosity of the electrocatalyst layer alone can be calculated therefrom.

The electrocatalyst layer has a large porosity, good gas diffusion and exhaust of products and also good electron conductivity and proton conductivity. Conventional pore-making processing includes the need for enlargement of diameters of catalyst particles or additional polymer particles, or formation of pores by using pore-making agents, but such pore-making processing results in the increased contact resistance in between the catalyst-supported carbons or in between the proton exchange resins, when compared with that of electrocatalyst layers. In contrast, the three-dimensional network micro pore structure prepared by wet coagulation makes the assembly of polymer and catalyst-supported carbon in the three dimensional network form such that the polymer assembly is easily conducted by electrons or protons, and also with the micro pore structure more suitable for gas diffusion or discharge of products.

Additionally, where the electrocatalyst layer has a three-dimensional micro pore structure, it is possible to use conventional materials for the catalyst, the electron conductor or the ion conductor. Because wet coagulation is preferred when preparing the electrocatalyst-layer with the three-dimensional network micro pore structure, a polymer suitable for such wet coagulation is preferred. A polymer that disperses the catalyst particles well and is not deteriorated by oxidization-reduction atmosphere within the fuel cell is preferred. Examples of such polymers, and not by way of limitation, include a polymer containing fluorine atoms such as polyvinyl fluoride (PVF), polyvinylidene fluoride (PVDF), polyhexafluoropropylene (FEP), polyperfluoroalkyl-vinylether (PFA) and the like, and copolymers of these monomer and other monomers such as ethylene, styrene and the like (for example, hexafluoropropylene-vinylidene fluoride copolymer), blends thereof and the like.

Among the above, the copolymer of polyvinylidene fluoride (PDVF) or hexafluoropropylene-vinylidene fluoride is particularly preferable because it enables production of the catalyst-polymer assembly with the three dimensional-network micro pore structure by wet coagulation using an aprotonic polar solvent, with a coagulation solvent being a protonic polar solvent. Examples of the solvents for such polymers include N-methylpyrolidone (NMP), dimethylformamide (DMF), dimethylacetamide (DMAC), propylene carbonate (PC), dimethylimidazolidinone (DMI) and the like. The coagulation solvents uses water or lower alcohols such as methanol, ethanol, isopropanol and the like, and also esters such as ethyl acetate, butyryl acetate and the like, and other various organic dissolving agents such as aromatic solvent or halide solvent.

Besides the above-described polymers, polymers with a proton exchange group are preferable to improve the proton conductivity. Examples of proton exchange groups included in such polymer are sulfonic acid group, carboxylic acid group, phosphoric acid group and the like, although these are not particularly limited therein. In addition, although selected without particular limitation, polymers consisting of a fluoroalkylether side chain and a fluoroalkyl main chain is preferably used for such polymers with proton exchange groups For example, Nafion, the product from DuPont, and the like are preferable. It is also preferable to use the above-described fluorine-containing polymers with proton exchange groups, other polymers such as those of ethylene and styrene, and copolymers or blends thereof

The polymer solution of Nafion may be prepared by dissolving the commercially available Nafion membrane in an aprotonic polar solvent. The coagulation solvent for wet coagulation has to be suitably selected based on the solvent of the Nafion solution. It is also possible to use the Nafion solution of a mixed solvent containing lower alcohols such as water-methanol-isopropanol, water-ethanol-isopropanol, water-ethanol-n-propanol and the like that are commercially available as products of Aldrich, Dupont, IonPower and the like. In addition, it is possible to use such Nafion solution that is concentrated or solvent-substituted. In this case, coagulation solvents, with the solvent of the Nafion solution being an aprotonic polar solvent, are preferably water, alcohols, esters and other various organic solvents, while the coagulation solvents, with the solvent of the Nafion solution being a lower alcohol solvent such as a mixed solvent of water-methanol-isopropanol and the like, preferably use esters such as butyryl acetate and the like, and various organic solvents.

As polymers used in the catalyst polymer assembly, it is also preferable to use copolymers or blends of the above-described fluorine-containing polymers or polymers containing the proton exchange membrane. In particular, it is preferable in terms of the electrode performance to blend copolymers such as polyvinylidene fluoride, poly(hexafluoropropylene-vinylidene fluoride) and the like, and polymers such as Nafion with a fluoroalkylether side chain and a fluoroalkyl main chain in the proton exchange group.

Catalyst-supported carbon and polymers are the main components of the catalyst polymer assembly, and the weight ratio of catalyst-supported carbon/polymer preferably ranges from 5/95 to 95/5, although not by way of particular limitation, wherein such ratio has to be suitably decided according to the electrode property in demand. In particular, the weight ratio of catalyst-supported carbon/polymer, when used as an electrocatalyst layer for PEFC, preferably ranges from 40/60 to 85/15.

Another preferable embodiment is to add other additives into the catalyst polymer assembly. While, such additives can be conductive agents such as carbon and the like to improve the electron conductivity; polymers to improve adherence; additives that control the pore diameters of the three-dimensional network micro pore structure. The amount of such additives, as a weight ratio against the catalyst polymer assembly, ranges preferably from 0.1 to 50 % and more preferably from 1 to 20 %.

The wet coagulation is preferable for preparing the catalyst polymer assembly with the three-dimensional network micro pore structure. This wet coagulation employs coating of the catalyst-polymer solution composition and then contacting this coated surface with the coagulation solvent for the polymers, wherein coagulation-precipitation and solvent-extraction of the catalyst-polymer solution composition occur simultaneously.

Such catalyst-polymer solution composition has a regular dispersion of the catalyst-supported carbon in the polymer solution. The above-described catalyst-supported carbon and polymer are preferably used. To dissolve the polymer, the solvent has to be suitably selected according to the polymer in use. It is crucial for the polymer solution to disperse well the catalyst-supported carbon. Poor dispersion is not preferred as it is not possible to form an assembly between catalyst-supported carbon and polymer when performing wet coagulation.

The coating methods are selected according to the viscosity, solid components and the like of the catalyst-polymer solution composition, and, although not particularly limited, are those of the general coating methods such as knife coater, bar coater, spray, dip coater, spin coater, roll coater, slot die coater, curtain coater and the like.

Coagulation solvents for wet coagulation are preferably those that easily coagulate and precipitate the polymer in use and are compatible with the solvent of the polymer solution. The method of contacting the polymer and the coagulation solvent in which the wet coagulation actually occurs, involves submerging each substrate into the coagulation solvent, contacting only the coating layer onto the surface of the coagulation solution, showering or spraying off the coagulation solvent onto the coating layer, and the like, though not particularly limited.

For the substrate to which this catalyst-polymer solution composition is applied, application can be made either on the electrode substrate or on the polymer electrolyte membrane. Then, wet coagulation can be performed. In addition, said composition can be applied onto substrate (transfer substrate) other than the electrode substrate and the polymer electrolyte, and, subsequently, the three-dimensional network micro pore structure can be prepared by performing wet coagulation. Subsequently, the electrocatalyst layer can be transferred or sandwiched onto the electrode substrate or polymer electrolyte membrane. For the above case, the transfer substrate can be polytetrafluoroethylene (PTFE) sheet, or glass or metal plate whose surface is treated with demolding agents of fluoro or silicone type.

The electrode substrate of PEFC of the present invention can be those known in the art. In addition, electrode substrate may not be used to save the space.

The electrode substrate used in the present invention may be those, without particular limitation, that enable low electric resistance and collection of electricity. Examples of materials for the electrode substrate can be those whose main component is conductive inorganic material, wherein examples of such conductive inorganic material include calcinations from polyacrylonitrile, calcinations from pitch, carbon material such as graphite, expanded graphite and the like, stainless steel, molybdenum, titan and the like.

The form of conductive inorganic material for the electrode substrate can be fiber or particle; and, though not particularly limited, fiber conductive inorganic material (inorganic conductive fabrics), in particular, carbon fibers are preferable in terms of the gas permeability. Either structure of woven and non-woven fabrics can be used for electrode substrate using the inorganic conductive fiber. For example, Carbon Paper TGP and SO series by Toray Industries, Inc. and Carbon Cloth by E-TEK are used. Plain weave, twill weave, stain weave, figured weave, tapestry and the like are used for woven fabrics without particular limitation. A paper making method, needle punch method, spun bond method, water jet punch method, melt blow method and the like are used for non-woven fabrics without particular limitation. Knitted fabrics may also be used. Such textiles, particularly using carbon fibers, preferably employ woven fabrics made by carbonizing or graphitizing plain weave fabrics of flame-retardant spinning and weaving fibers, non-woven fabrics made by non-woven processing employing needle punch method, water jet punch method and the like on flame-retardant spinning and weaving fibers, followed by carbonizing or graphitizing the former, non-woven mat fabrics made by paper making method employing flame-retardant fibers, carbonized fibers or graphitized fibers. In particular, the non-woven fabrics are preferable because thin, strong textiles can be obtained.

When inorganic conductive fibers consisting of carbon fibers are used in the electrode substrates, examples of the carbon fibers are polyacrylonitrile (PAN) type carbon fibers, phenol type carbon fibers, pitch type carbon fibers, rayon type carbon fibers and the like. Among these, the PAN type carbon fibers are preferable. In general, the PAN type carbon fibers, compared with those of pitch type, are unbreakable because of high compression strength and elongation at break. This is believed to result from differential crystallization of carbon that constitutes the carbon fibers. To obtain the unbreakable carbon fibers, the carbonization temperature of carbon fibers is equal to or below 2,500 °C and more preferably equal to or below 2,000 °C.

It is also another preferable embodiment to provide the electrode substrate used in the PEFC of the present invention with water-repellent treatment to prevent lowering of gas diffusion-permeability due to the resident water; partial water-repellent and hydrophilic treatment to form a water outlet; addition of carbon powder to lower resistance and the like.

Another preferable embodiment also provides PEFC of the present invention a diffusion layer to enhance influx of air or fuel such as hydrogen, methanol solution and the like, and exhaust of products such as water, carbon dioxide and the like when the PEFC has the side-by-side structure. The above-described electrodes serve as such diffusion layer, but a further preferable embodiment allows such diffusion layer to use non-conductive textiles. For example, any non-conductive fibers can be used as a material for the non-conductive textiles without particular limitation.

Examples of non-conductive fibers constituting the non-conductive textiles of the diffusion layer are polytetrafluoroethylene (PTFE), tetrafluoroethylene-hexafluoroethylene copolymer (FEP), tetrafluoroethylene-perfluoroalkylvinylether copolymer (PFA), tetrafluoroethylene-ethylene copolymer (ETFE), polyvilnylidene fluoride (PVDF), polyvinyl fluoride (PVF), polychlorotrifluoroethylene (CTFE), chlorinated polyethylene, flame-retardant polyacrylonitrile, polyacrylonitrile, polyester, polyamide, polyethylene, polypropylene and the like, which can be used without particular limitation. Among such non-conductive fibers, those of fluorine-containing polymers such as PTFE, FEP, PFA, ETFE, PVDF, PVF, CTFE and the like are preferable in terms of corrosion resistance and the like during the electrode reaction.

Non-conductive textiles of the diffusion layer can use either structure of woven and non-woven fabrics. Plain weave, twill weave, stain weave, figured weave, tapestry and the like are used for the woven fabrics without particular limitation. Paper making methods, needle punch method, spun bond method, water jet punch method, melt blow method and the like, are used for the non-woven fabrics without particular limitation. Knitted fabrics may also be used. In such textiles, it is preferable to use, in particular, plain weaves; non-woven fabrics by needle punch method, water jet punch method and the like; non-woven mat fabrics by paper making method and the like. In particular, non-woven fabrics are preferable as porous, thin and strong textiles are obtained.

It is also another preferable embodiment to provide the non-conductive textiles of the diffusion layer with water-repellent treatment to prevent lowering of gas diffusion-permeability due to the resident water; partial water-repellent and hydrophilic treatment to form a water outlet and the like. Furthermore, it is also another preferable embodiment to provide the non-conductive textiles of the diffusion layer with post-treatment such as heat treatment, elongation, pressing and the like. Such posttreatments can lead to preferable effects of decreased thickness, increased porosity, increased strength and the like.

Another preferable embodiment provides PEFC of the present invention with a conductive intermediate layer including at least inorganic conductive material and hydrophobic polymer placed in between the electrode substrate and the electrocatalyst layer. In particular, when the electrode substrate is carbon fabrics or non-woven fabrics with high porosity, such conductive intermediate layer can inhibit lowering of performance that results from leakage of the electrocatalyst layer into the electrode substrate.

When the above-described membrane electrode assembly (MEA) employs PEM of the present invention, it is also a preferable embodiment to prepare MEA after post-treatment of PEM. For example, it is also preferable to coat PEM with metal thin film to further lower permeation of the fuel methanol. Examples of such metal thin films are those of palladium, platinum, silver and the like.

There is no particular limitation to a process for preparing MEA using PEM of the present invention and the above-described electrocatalyst layer or electrocatalyst layer and the electrode substrate. It is a preferable embodiment to assembly the components by hot pressing under the condition of heating and pressing. However, the temperature and the pressure have to be suitably selected according to thickness and porosity of PEM, the electrocatalyst layer or the electrode substrate; in general being preferably from 40 °C to 180 °C and 10 kgf/cm² to 80 kgf/cm².

PEM of the present invention can be applied to various electro-chemical devices. Examples can be a fuel cell, a electrolyzer, chloroalkaline electrolyzer and the like, wherein among those a fuel cell is the most preferable. Among the fuel cells, PEM of the present invention is particularly suitable for PEFC, wherein PEFC uses, as a fuel source, hydrogen and organic solvent such as methanol, with DMFC using methanol as its fuel particularly preferable, although not particularly limited.

The preferred use of the PEFC of the present invention includes use in power sources for mobile units, although not particularly limited therein. In particular, examples of preferable mobile units are mobile phones, personal computers, portable units such as PDA, electric home appliances such as vacuum cleaners, automobiles such as a sedan, a bus, a truck and the like, vessels, and railroads.

### Examples

Detailed descriptions for the present invention are explained below using the following examples.

### Example 1

### (1) Preparation of multipore film

A silicon wafersilicon wafer was coated with negative-type photosensitive polyimide by spin coating and pre-baked at 110 °C. The silicon wafersilicon wafer was radiated through a photo mask, developed, washed and then full-baked at 350 °C. The above was submerged into hydrofuluoric acid solution, and the porous polyimide film was obtained by exfoliation from the silicon wafersilicon wafer. The obtained film is as shown in Figure 1, wherein the porous polyimide film was a square shape with the external size of 8 cm x 8 cm and the thickness of 10 µm; the porous area (1) in the center was a square with the external size of 2.2 cm x 2.2 cm and the porous area (1) was surrounded by non-porous area (2). The porous area (1) was bored with collimated pores (3) whose diameter d was about 12 µm, wherein the center distance of the collimated pores L was about 33 µm, the porosity about 11 % and the number of the collimated pores about 442,000. The relative standard deviation (LVar/LAve) was 0.17 with calculations of LAve, the average of L the center distances between adjacent collimated pores and its standard deviation, LVar. Figure 3 is a perspective view using SEM of this porous area.

### (2) Preparation of PEM

The multipore film prepared by the above processing (1) was submerged into Nafion solution and dried to prepare PEM that consisted of porous polyimide film filled with the Nafion proton conductor. The membrane thicknessmembrane thickness was about 40 µm.

### (3) Preparation of electrodes

Electrode substrates were prepared by water-repellent treatment with 10 % PTFE and calcination of the carbon paper substrate. The anode was prepared by coating this electrode substrate with the anode catalyst coating solution that consisted of Pt-Ru supported carbon and Nafion solution and followed by drying, and the cathode was prepared by coating the electrode substrate with the cathode catalyst coating solution that consisted of Pt supported carbon and the Nafion solution and followed by drying.

### (4) Preparation and evaluation of DMFC

MEA was prepared by sandwiching PEM of the above processing (2) in between the anode and the cathode prepared by the above processing (3) and then pressing with heat. This MEA was inserted into a separator. 3 % MeOH solution and air were flowed into the anode and the cathode, respectively, so that evaluation of MEA showed the highest output power of 4.4 [mW/cm²]. The evaluation results are shown in Table 1.

### Example 2

### (1) Preparation of multipore film

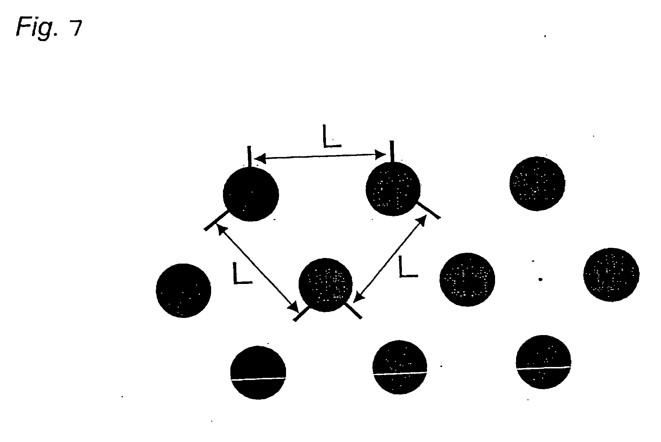

A silicon wafersilicon wafer was coated with negative-type photosensitive polyimide by spin coating and pre-baked at 110 °C. The silicon wafersilicon wafer was radiated through a photo mask with the pore disposition represented in Figure 7, developed, washed and then full-baked at 350 °C. The above was submerged into hydrofuluoric acid solution, and the porous polyimide film was obtained by exfoliation from the silicon wafersilicon wafer. The obtained film is as shown in Figure 1, wherein the porous polyimide film was a square with the external size of 8 cm x 8 cm and the thickness of 10 µm; the porous area (1) in the center was a square had external size of 2.2 cm x 2.2 cm and the porous area (1) was surrounded by non-porous area (2). The porous area (1) was bored with the collimated pore (3) whose diameter d was 12 µm, wherein the porosity and the number of the collimated pores were about 11 % and about 440,000, respectively. The relative standard deviation (LVar/LAve) was 3.1 x 10⁻³ with calculations of LAve, the average of L the center distances between adjacent collimated pores and its standard deviation, LVar.

### (2) Preparation of PEM

PEM was prepared using the porous polyimide film that was processed by charging the multipore film of the above processing (1) with the proton conductor Nafion polymer as done in Example 1. The membrane thickness was about 35 µm.

### (3) Preparation and evaluation of PEFC

MEA was prepared by sandwiching PEM of the above processing (2) in between the anode and the cathode prepared as in Example 1 and then pressing with heat. Evaluation of the MEA was made as in Example 1. The results from the evaluation are shown in Table 1.

### Comparative Example 1

### (1) Multipore film

"Nuclepore", a commercially available porous filter membrane, was used as the multipore film. The film was made from polycarbonate and bored with collimated pores whose diameter d was 12 µm, wherein the porosity and the membrane thickness were about 11 % and 8 µm, respectively. The relative standard deviation (LVar/LAve) was 0.45 with calculations of LAve, the average of L the center distances between adjacent collimated pores and its standard deviation, LVar.

### (2) Preparation of

PEM was prepared by charging the multipore film of the above processing (1) with the proton conductor Nafion polymer as performed in Example 1. The membrane thickness was about 33 µm. In addition, application of non-conductive epoxy resin to prepare the non-porous area led to obvious reduction of efficiency due to the increased amount of polymer used.

### (3) Preparation of PEFC and evaluation of the methanol type

MEA was prepared by sandwiching PEM of the above processing (2) in between the anode and the cathode prepared as in Example 1 and then by pressing with heat; and the evaluation of MEA was made as in Example 1. The evaluation results are shown in Table 1. Pore diameters were enlarged due to overlapping of the pores, charging of the polymer was bad, and the highest output power was decreased.

### Example 3

### (1) Preparation of multipore film

The porous polyimide film was prepared pursuant to processing (1) of Example 1. The porous area (1) of the obtained film was bored with collimated pores (3) whose diameter d was 20 µm, wherein L, the center distance of the collimated pores, the porosity and the number of the collimated pores were about 32 µm, about 30 % and about 480,000, respectively. The pore disposition was the same as that of Example 1. The relative standard deviation (LVar/LAve) was 0.16 with calculations of LAve, the average of L the center distances between adjacent collimated pores and its standard deviation, LVar.

### (2) Preparation of PEM

PEM was prepared using the porous polyimide film that was processed by charging the multipore film of the above processing (1) with the proton conductor Nafion polymer as in Example 1. The membrane thickness was about 35 µm.

### (3) Preparation and evaluation of PEFC

MEA was prepared by sandwiching PEM of the above processing (2) in between the anode and the cathode prepared as in Example 1 and then by pressing with heat; and the evaluation of MEA was performed as in Example 1. The results of the evaluation are tabulated in Table 2.

### Example 4

### (1) Preparation of multipore film

The porous polyimide film was prepared as in processing (1) of Example 1. The porous area (1) of the obtained film was bored with collimated pores (3) whose diameter d was 10 µm, wherein L, the center distance of the collimated pores, the porosity and the number of the collimated pores were about 12 µm, about 50 % and about 3,200,000, respectively. The pore disposition was the same as that of Example 1. The relative standard deviation (LVar/LAve) was 0.18 with calculations of LAve, the average of L the center distances between adjacent collimated pores and its standard deviation, LVar.

### (2) Preparation of PEM

PEM was prepared by using the porous polyimide film, which was prepared by charging the multipore film of above processing (1) with the proton conductor Nafion polymer as in Example 1. The membrane thickness was about 31 µm.

### (3) Preparation and evaluation of PEFC

MEA was prepared by sandwiching PEM of the above processing (2) in between the anode and the cathode prepared as in Example 1 and then by pressing with heat; and the evaluation of MEA was made as in Example 1. The results of the evaluation are tabulated in Table 2.

### Comparative Example 2

The supporting membrane, with collimated pore diameter d of 20 µm, porosity of about 30 % and membrane thickness of 10 µm, was prepared by ion radiation-alkaline etching onto the polycarbonate membrane. The membrane was weakened and ruptured during the handling. The relative standard deviation (LVar/LAve) was 0.45 with calculations of LAve, the average of L the center distances between adjacent collimated pores and its standard deviation, LVar.

### Comparative Example 3

The supporting membrane, with collimated pore diameter d of 10 µm, porosity of about 50 % and membrane thickness of 10 µm, was prepared by ion radiation-alkaline etching onto the polycarbonate membrane. The membrane was weakened and ruptured during the handling. The relative standard deviation (LVar/LAve) was 0.66 with calculations of LAve, the average of L the center distances between adjacent collimated pores and its standard deviation, LVar.

### Example 5

### (1) Preparation of multipore film

A silicon wafer was coated with negative-type photosensitive polyimide by spin coating and pre-baked at 110 °C. The silicon wafer was radiated through a photo mask, developed, washed and then full-baked at 350 °C. The above was submerged into hydrofuluoric acid solution, and the porous polyimide film was obtained by exfoliation from the silicon wafer. The obtained porous film was a square with the external size of 8 cm x 8 cm and the thickness of 10 µm, as shown in Figure 5; wherein the center of the film had 4 conducting pores with 1 mm width, and the right and left end of the film had 2 square porous areas (1) with the external size 2.2 cm x 2.2 cm, surrounded by the non-porous area (2) not having pores. The porous area (2.2 cm x 2.2 cm) was disposed substantially identical to Example 1 and bored with collimated pores (3) whose diameter d was about 12 µm, wherein the center distance L of the collimated pores was about 33 µm, the porosity about 11 % and the number of the collimated pores about 442,000. The relative standard deviation (LVar/LAve) was 0.17 with calculations of LAve, the average of L the center distances between adjacent collimated pores and its standard deviation, LVar.

### (2) Preparation of conducting area and PEM

The conducting area was prepared by placing conductive paste into the conducting pores in the center of the multipore film of the above processing (1). Such processed film was then submerged into the Nafion solution and dried to prepare PEM. The membrane thickness was about 33 µm.

### (3) Preparation of electrodes

Electrode substrates were prepared by water-repellent treatment with 20 % PTFE, application of a carbon black dispersion solution including 20 % of PTFE and calcination of the carbon fiber cloth substrate. The anode was prepared by coating this electrode substrate with the anode catalyst coating solution that consisted of Pt-Ru supported carbon and the Nafion solution and followed by drying. The cathode was prepared by coating the electrode substrate with the cathode catalyst coating solution that consisted of Pt supported carbon and the Nafion solution and followed by drying.

### (4) Preparation and evaluation of PEFC

MEA was prepared by sandwiching PEM of the above processing (2) in between 2 sheets of the anode and 2 sheets of the cathode prepared by the above processing (3) and then by pressing with heat to prepare MEA with the side-by-side structure shown in Figure 6. This MEA was inserted into a separator. 3 % MeOH solution and air were flowed into the anode and the cathode, respectively to evaluate the MEA. The evaluation results are shown in Table 3.

### Comparative Example 4

### (1) Multipore film

The same multipore film as in Comparative Example I was used. The productivity for the film decreased by many degrees as 4 conducting pores with 1-mm width and the same shape as in Figure 5 were made in the center of the film.

### (2) Preparation of conducting area and PEM

The conducting area was prepared placing conductive paste into the conductive pores in the center of the multipore film of the above processing (1). Such processed film was then submerged into the Nafion solution and dried to prepare PEM. The membrane thickness was about 35 µm. The application of non-conductive epoxy resin to prepare the non-porous area led to a curtailment in the productivity of the membrane due to the increased amount of polymer used.

### (3) Preparation of PEFC and evaluation of the methanol type

MEA with side-by side structure was prepared using the above PEM and the electrodes identically prepared as in Example 5. This MEA was inserted into a separator. 3 % MeOH solution and air were flowed into the anode and the cathode, respectively to evaluate the MEA The evaluation results are shown in Table 3. Pore diameters were enlarged due to overlapping of the pores, charging of the polymer was bad, and the highest output power was decreased.

### Comparative Example 5

### (1) Preparation and evaluation of PEFC

MEA with a side-by-side structure was prepared using Nafion 117 and the electrodes made substantially identical to those in Example 5. For electron conduction, electron conducting area was installed by turning the outer side of the Nafion membrane by using thin film of platinum. This MEA was inserted into a separator. 3 % MeOH solution and air were flowed into the anode and the cathode, respectively to evaluate the MEA. The results of the evaluation are shown in Table 3.

### Example 6

### (1) Preparation and evaluation of PEFC

The MEA prepared by the above processing of Example 5 was inserted into a separator having a window open to the air in the cathode side. 3 % MeOH solution was flowed into the anode, while the cathode contacted with ambient air to evaluate the MEA. The evaluation results are shown in Table 4.

### Comparative-Example 6

### (1) Preparation and evaluation of PEFC

The MEA prepared by the above processing of Comparative Example 4 was inserted into a separator having a window open to the air in the cathode side. 3 % MeOH solution was flowed into the anode, while the cathode contacted with ambient air to evaluate the MEA- The evaluation results are shown in Table 4. Pore diameters were enlarged due to overlapping of the pores, charging of the polymer was bad, and the highest output power was decreased.

### Example 7

### (1) Preparation of multipore film

A porous polyimide film was prepared as in processing (I) of Example 1. The porous area (1) of the obtained film was bored with collimated pores (3) whose diameter d was 3 µm, wherein the pore disposition was the same as in Example 1 with the porosity being about 40 % and the relative standard deviation of L, the center distances between adjacent collimated pores was 0.16.

### (2) Preparation of PEM

The porous polyimide film PEM was prepared by charging the multipore film of the above processing (1) with the proton conductor Nafion polymer as done in Example 1. The membrane thickness was about 36 µm.

### (3) Preparation and evaluation of PEFC

MEA was prepared by sandwiching PEM of the above processing (2) in between the anode and the cathode prepared as in Example 5 and then by pressing with heat; and the evaluation of MEA was performed as in Example 1. The evaluation results are shown in Table 5.

### Example 8

### (1) Preparation of multipore film

A porous polyimide film was prepared as in processing (1) of Example 1. The porous area (1) of the obtained film was bored with collimated pores (3) whose diameter d was 18 µm, wherein the pore disposition was the same as in Example 1 with the porosity being about 10 % and the relative standard deviation of L, the center distances between adjacent collimated pores, being 0.18.

### (2) Preparation of PEM

A porous polyimide film PEM was prepared by charging the multipore film of the above processing (1) with the proton conductor Nafion polymer as done in Example 1. The membrane thickness was about 32 µm.

### (3) Preparation and evaluation of PEFC

MEA was prepared by sandwiching PEM of the above processing (2) in between the anode and the cathode prepared as in Example 5 and then by pressing with heat; and an evaluation of MEA was conducted as in Example 1. The evaluation results are tabulated in Table 5.

### Example 9

### (1) Preparation of multipore film

The porous polyimide film was prepared as in processing (1) of Example 1. The porous area (1) of the obtained film was bored with collimated pores (3) whose diameter d was 50 µm, wherein the pore disposition was the same as in Example 1 with the porosity being about 5 % and the relative standard deviation of L, the center distances between adjacent collimated pores, being 0.20.

### (2) Preparation of PEM

The porous polyimide film PEM was prepared by charging the multipore film of the above processing (1) with the proton conductor Nafion polymer as in Example 1. The membrane thickness was about 30 µm.

### (3) Preparation and evaluation of PEFC

MEA was prepared by sandwiching PEM of the above processing (2) in between the anode and the cathode prepared as in Example 5 and then by pressing with heat; and the evaluation of MEA was made as in Example 1. The evaluation results are shown in Table 5.

### Example 10

### (1) Preparation of multipore film

The porous polyimide film was prepared as in the processing (1) of Example 1. The porous area (1) of the obtained film was bored with collimated pores (3) whose diameter d was 12 µm, wherein the pore disposition was the same as in Example 1 with the porosity being about 55 % and the relative standard deviation of L, the center distances between adjacent collimated pores, being 0.17.

### (2) Preparation of PEM

The porous polyimide film PEM was prepared by charging the multipore film of the above processing (1) with the proton conductor Nafion polymer as in Example 1. The membrane thickness was about 38 µm.

### (3) Preparation and evaluation of PEFC

MEA was prepared by sandwiching PEM of the above processing (2) in between the anode and the cathode prepared as in Example 5 and then by pressing with heat; and the evaluation of MEA was made as in Example 1. The evaluation results are shown in Table 5.

### Example 11

### (1) Preparation of multipore film

The porous polyimide film was prepared as in processing (1) of Example 1. The porous area (1) of the obtained film was bored with collimated pores (3) whose diameter d was 30 µm, wherein the pore disposition was the same as in Example 1 with the porosity being about 20 % and the relative standard deviation of L, the center distances between adjacent collimated pores, being 0.16.

### (2) Preparation of PEM

The porous polyimide film PEM was prepared by charging the multipore film of the above processing (1) with the proton conductor Nafion polymer as done in Example 1. The membrane thickness was about 35 µm.

### (3) Preparation and evaluation of PEFC

MEA was prepared by sandwiching PEM of the above processing (2) in between the anode and the cathode prepared as in Example 5 and then by pressing with heat; and the evaluation of MEA was made as in Example 1. The evaluation results are shown in Table 5.

### Example 12

### (1) Preparation of multipore film

The porous polyimide film was prepared as in the processing (1) of Example 1. The porous area (1) of the obtained film was bored with collimated pores (3) whose diameter d was 80 µm, wherein the pore disposition was the same as in Example I with the porosity being about 10 % and the relative standard deviation of L, the center distances between adjacent collimated pores, being 0.18.

### (2) Preparation of PEM

The porous polyimide film PEM was prepared by charging the multipore film of the above processing (1) with the proton conductor Nafion polymer as in Example 1. The membrane thickness was about 30µm.

### (3) Preparation and evaluation of PEFC

MEA was prepared by sandwiching PEM of the above processing (2) in between the anode and the cathode prepared as in Example 5 and then by pressing with heat; and the evaluation of MEA was made as in Example 1. The evaluation results are shown in Table 5.

### Example 13

### (1) Preparation of multipore film

The porous polyimide film was prepared as done in the processing (1) of Example 1. The porous area (1) of the obtained film was bored with collimated pores (3) whose diameters d were 5, 20 and 50 µm, wherein the pore disposition was the same as in Example 1 with the porosity being about 10 % and the relative standard deviation of L, the center distances between adjacent collimated pores, being 0.21.

### (2) Preparation of PEM

The porous polyimide film PEM was prepared by charging the multipore film of the above processing (1) with the proton conductor Nafion polymer as done in Example 1. The membrane thickness was about 31 µm.

### (3) Preparation and evaluation of PEFC

MEA was prepared by sandwiching PEM of the above processing (2) in between the anode and the cathode prepared as in Example 5 and then by pressing with heat; and the evaluation of MEA was made as done in Example 1. The evaluation results were shown in Table 5.

### Example 14

### (1) Preparation of multipore film

The porous polyimide film was prepared as in the processing (1) of Example 1. The porous area (1) of the obtained film was bored with collimated pores (3) whose diameter d was 0.1 µm, wherein the pore disposition was the same as in Example 1 with the porosity being about 10 % and the relative standard deviation of L, the center distances between adjacent collimated pores, being 0.19.

### (2) Preparation of PEM

The porous polyimide film PEM was prepared by charging the multipore film of the above processing (1) with the proton conductor Nafion polymer as done in Example 1. The membrane thickness was about 34 µm.

### (3) Preparation and evaluation of PEFC

MEA was prepared by sandwiching PEM of the above processing (2) in between the anode and the cathode prepared as in Example 5 and then by pressing with heat; and the evaluation of MEA was made as done in Example 1. The evaluation results are shown in Table 5.

### Example 15

### (1) Preparation of multipore film

The porous polyimide film was prepared as in the processing (1) of Example 1. The porous area (1) of the obtained film was bored with collimated pores (3) whose diameter d was 40 µm, wherein the pore disposition was the same as in Example 1 with the porosity being about 20 % and the relative standard deviation of L, the center distances between adjacent collimated pores, being 0.18.

### (2) Preparation of PEM

PEM was prepared by using the porous polyimide film, which is prepared by charging the multipore film of the above processing (1) with the proton conductor Nafion polymer as done in Example 1. The membrane thickness was about 35 µm.

### (3) Preparation of PEFC and evaluation of the methanol type

MEA was prepared by sandwiching PEM of the above processing (2) in between the anode and the cathode prepared as in Example I and then by pressing with heat; and the evaluation of MEA was made as in Example 1, showing the highest output power of 3.9 [mW/cm²].

### (4) Preparation of PEFC and evaluation of the hydrogen type

MEA was prepared by sandwiching PEM of the above processing (2) in between the cathodes prepared as in Example 1 and then by pressing with heat; and was inserted into a separator to prepare PEFC. The current-voltage (I-V) of this fuel cell was measured under conditions of cell temperature: 60 °C, fuel gas: hydrogen, oxidizing gas: air and gas utilization ratio: 70 % for anode/ 40 % for cathode, showing the highest output power of 51 [mW/cm²].

### Example 16

### (1) Preparation of multipore film

The porous polyimide film was prepared as in processing (1) of Example 1. The porous area (1) of the obtained film was bored with collimated pores (3) whose diameter d was 50 µm, wherein the pore disposition was the same as in Example 1 with the porosity being about 20 % and the relative standard deviation of L, the center distances between adjacent collimated pores, being 0.17.

### (2) Preparation of PEM

PEM was prepared by using the porous polyimide film, which is prepared by charging the multipore film of the above processing (1) with the proton conductor Nafion polymer as done in Example 1. The membrane thickness was about 38 µm.

### (3) Preparation of PEFC and evaluation of the methanol type

MEA was prepared by sandwiching PEM of the above processing (2) in between the anode and the cathode prepared as in Example 1 and then by pressing with heat; and the evaluation of MEA was made as in Example I, showing the highest output power of 4.2 [mW/cm²].

### (4) Preparation of PEFC and evaluation of the hydrogen type

MEA was prepared by sandwiching PEM of the above processing (2) in between the cathodes prepared as in Example I and then by pressing with heat; and was inserted into a separator so as to prepare PEFC and to evaluate the hydrogen type MEA in the same way as Example 15, showing the highest output power of 55 [mW/cm²].

### Example 17

### (1) Preparation of multipore film

The porous polyimide film was prepared as in processing (1) of Example 1. The porous area (1) of the obtained film was bored with collimated pores (3) whose diameter d was 20 µm, wherein the pore disposition was the same as in Example 1 with the porosity being about 10 %, the thickness of membrane being 10 µm and the relative standard deviation of L, the center distances between adjacent collimated pores, being 0.17.

### (2) Preparation of PEM

PEM was prepared by using the porous polyimide film, which is prepared by charging the multipore film of the above processing (1) with the proton conductor Nafion polymer as done in Example 1. The membrane thickness was about 30 µm.

### (3) Preparation of PEFC and evaluation of the methanol type

MEA was prepared by sandwiching PEM of the above processing (2) in between the anode and the cathode prepared as in Example 1 and then by pressing with heat; and the evaluation of MEA was made as in Example 1.

### (4) Preparation of PEFC and evaluation of the hydrogen type

MEA was prepared by sandwiching PEM of the above processing (2) in between the cathodes prepared as in Example 1 and then by pressing with heat; and the evaluation of MEA was made as in Example 1. The evaluation results are tabulated in Table 6.

### Example 18

### (1) Preparation of PEM

The same porous film as that of Example 17 was submerged into a sulfonated polyimide (PI) (ion exchange equivalents: 1.7 meq) solution, withdrawn from the solution and dried to make a PEM. The membrane thickness was about 32 µm.

### (2) Preparation and evaluation of PEFC

MEA was prepared by sandwiching PEM of the above processing (1) in between the anode and the cathode prepared as in Example 1 and then by pressing with heat; and the evaluation of MEA was made as in Example 1. The evaluation results are shown in Table 6.

### Example 19

### (1) Preparation of PEM

The same porous polyimide film as that of Example 17 was submerged into a sulfonated polyphenoxy phosphagen (PDPOP) (ion exchange equivalents: 1.0 meq) solution, withdrawn from the solution and dried to make a PEM. The membrane thickness was about 35 µm.

### (2) Preparation and evaluation of PEFC

MEA was prepared by sandwiching PEM of the above processing (1) in between the anode and the cathode prepared as in Example 1 and then by pressing with heat; and the evaluation of MEA was made as in Example 1. The evaluation results are shown in Table 6.

### Example 20

### (1) Preparation of PEM

The same porous polyimide film as that of Example 17 was submerged into a sulfonated polyphenylenesulfidesulfon (PPSS) (ion exchange equivalents: 2.0 meq) solution, withdrawn from the solution and dried so as to prepare PEM. The membrane thickness was about 30 µm.

### (2) Preparation and evaluation of PEFC

MEA was prepared by sandwiching PEM of the above processing (1) in between the anode and the cathode prepared as in Example 1 and then by pressing with heat; and the evaluation of MEA was made as in Example 1. The evaluation results are shown in Table 6.

### Example 21

### (1) Preparation of PEM

The same porous polyimide film as in Example 17 was submerged in a polymer solution, which was prepared by adding an equivalent of hydrolyzed solid phenoxytrimethoxy-silane to a Nafion solution, withdrawn from the solution and dried to make a PEM. The membrane thickness was about 39 µm.

### (2) Preparation and evaluation of PEFC

MEA was prepared by sandwiching PEM of the above processing (1) in between the anode and the cathode prepared as in Example 1 and then by pressing with heat; and the evaluation of MEA was made as in Example 1. The evaluation results are shown in Table 6.

### Example 22

### (1) Preparation of PEM

The same porous polyimide film as that of Example 17 was submerged into a polymer solution wherein sulfonated polyimide and polyphenylene sulfide sulfone were added in weight equivalents, withdrawn from the solution and dried to make a PEM. The membrane thickness was about 34 µm.

### (2) Preparation and evaluation of PEFC

MEA was prepared by sandwiching PEM of the above processing (I) in between the anode and the cathode prepared as in Example I and then by pressing with heat; and the evaluation of MEA was made as in Example 1. Evaluation results are shown in Table 6.

### Example 23

### (1) Preparation of multipore film and Pd-coated PEM

The porous polyimide film was prepared as in processing (1) of Example 1. The porous area (1) of the obtained film was bored with collimated pores (3) whose diameter d was 12 µm, wherein the pore disposition was the same as in Example 1 with the porosity being about 10 % and the relative standard deviation of L, the center distances between adjacent collimated pores, being 0.18.

### (2) Preparation of PEM

The porous polyimide film PEM was prepared by charging the multipore film of the above processing (1) with the proton conductor, Nafion polymer as done in Example 1. The membrane thickness was about 31 µm. Thin-film coated PEM was prepared by sputtering palladium on one side of the membrane.

### (3) Preparation and evaluation of PEFC

MEA was prepared by sandwiching PEM of the above processing (1) in between the anode and the cathode prepared as in Example 5 and then by pressing with heat; and the evaluation of MEA was made as in Example 1. Evaluation results are shown in Table 7.

### Example 24

### (1) Preparation of multipore film and Pd sandwich PEM

The porous polyimide film was prepared as in Example 23, and 2 sheets of films charged with the Nafion polymer were prepared. The membrane thickness was about 34 µm. This film was used to sandwich both sides of palladium film with deposition of platinum (electrodeposition of platinum onto commercially available palladium film of 25 µm-thickness) to prepare the PEM of this example.

### (2) Preparation and evaluation of PEFC

MEA was prepared by sandwiching PEM of the above processing (1) in between the anode and the cathode prepared as in Example 5 and then by pressing with heat; and the evaluation of MEA was made as in Example 1. The evaluation results are shown in Table 7.

### Example 25

### (1) Preparation of multipore film

Silicon wafer was coated with positive-type photosensitive polyimide by spin coating and pre-baked at 110 °C. The silicon wafer was radiated through a photo mask in a reversed shape of that in Example 1, developed, washed and then full-baked at 350 °C. The above was submerged into hydrofuluoric acid solution, and the porous polyimide film was obtained by exfoliation from the silicon wafer. The obtained film was a square with external size of 8 cm x 8 cm and thickness of 8 µm. The porous area (1) in the center was a square with dimensions 2.2 cm x 2.2 cm and surrounded by a non-porous area (2) not having pores. The porous area was bored with collimated pores (3) whose diameter d was about 20 µm, wherein the pore disposition was the same as in Example 1 with the porosity being about 30 % and the relative standard deviation of L, the center distances between adjacent collimated pores, being 0.17.

### (2) Preparation of PEM

PEM that consisted of the porous polyimide film charged with the proton conductor Nafion polymer was prepared by submerging the multipore film of the above processing (I) into the Nafion solution and drying it. The membrane thickness was about 32 µm.

### (3) Preparation of PEFC and evaluation of methanol type

MEA was prepared by sandwiching PEM of the above processing (2) in between the anode and the cathode prepared as in Example 5 and then by pressing with heat; and the evaluation of MBA was made as in Example 1, showing the highest output power of 3.1 [mW/cm²].

### Example 26

### (1) Preparation of multipore film

Silicon wafer was coated with non-photosensitive polyimide by spin coating and pre-baked at 110 °C. The silicon wafer was coated with photoresist, radiated through a photo mask that was prepared with the pore disposition represented in Figure 7, developed, bored with the collimated pores by alkaline treatment and then full-baked at 350 °C. The above was submerged into hydrofuluoric acid solution, and the porous polyimide film was obtained by exfoliation from the silicon wafer. The obtained film was a square with external size of 8 cm x 8 cm and thickness of 10 µm, and the porous area (1) in the center was a square with external size of 2.2 cm x 2.2 cm and surrounded by the non-porous area (2) not having pores. The porous area (1) was bored with collimated pores (3) whose diameter d was about 16 µm, wherein the porosity being about 10 % and the relative standard deviation of L, the center distances between adjacent collimated pores, being 4.5 x 10 ⁻³.

### (2) Preparation of PEM

PEM that consisted of the porous polyimide film charged with the proton conductor Nafion polymer was prepared by submerging the multipore film of the above processing (1) into the Nafion solution and drying it. The membrane thickness was about 38 µm.

### (3) Preparation of PEFC and evaluation of the methanol type

MEA was prepared by sandwiching PEM of the above processing (2) in between the anode and the cathode prepared as in Example 5 and then by pressing with heat; and the evaluation of MEA was made as in Example 1, showing the highest output power of 3.9 [mW/cm²].

### Example 27

### (1) Preparation of multipore film

Silicon wafer was coated with photosensitive acryl group-containing silicone by spin coating and pre-baked at 80 °C. The silicon wafer was radiated through a photo mask, developed, washed and then full-baked at 150 °C. The above was submerged into hydrofuluoric acid solution, and the porous silicone film was obtained by exfoliation from the silicon wafer. The obtained film was the same as depicted in Figure 1, a square with the external size of 8 cm x 8 cm and the thickness of 5 µm, and the porous area (1) in the center was a square with the external size of 2.2 cm x 2.2 cm and surrounded by the non-porous area (2). The porous area (I) was bored with collimated pores (3) whose diameter d was 30 µm, wherein the pore disposition was the same as in Example 1 with the porosity being about 10 % and the relative standard deviation of L, the center distances between adjacent collimated pores, being 0.18.

### (2) Preparation of PEM

PEM that consisted of the porous polyimide film charged with the proton conductor Nafion polymer was prepared by submerging the multipore film of the above processing (1) into the Nafion solution and drying it. The membrane thickness was about 30 µm.

### (3) Preparation of PEFC and evaluation of the methanol type

MEA was prepared by sandwiching PEM of the above processing (2) in between the anode and the cathode prepared as in Example 5 and then by pressing with heat; and evaluation of the MEA was performed as in Example 1, showing the highest output power of 3.5 [mW/cm²].

### Example 28

### (1) Preparation of multipore film

Porous silicone film was obtained by boring the commercially available polyimide "Kapton film" of 10 µm-thickness using the needle punch method. The obtained film was the same as in Figure 1, a square with dimensions 8 cm x 8 cm and thickness of 10 µm, and the porous area (1) in the center was a square with the external size of 2.2 cm x 2.2 cm and surrounded by the non-porous area (2). The porous area (1) was bored with collimated pores (3) whose diameter d was 20 µm, wherein the pore disposition was the same as in Example 1 with the porosity being about 10 % and the relative standard deviation of L, the center distances between adjacent collimated pores, being 0.20.

### (2) Preparation of PEM

PEM that consisted of the porous polyimide film charged with the proton conductor Nafion polymer was prepared by submerging the multipore film of the above processing (1) with the Nafion solution and drying it. The membrane thickness was about 34 µm.

### (3) Preparation of PEFC and evaluation of the methanol type

MEA was prepared by sandwiching PEM of the above processing (2) in between the anode and the cathode prepared as in Example 5 and then by pressing with heat. Evaluation of the MEA was made as in Example 1, showing the highest output power of 3.0 [mW/cm²].

### Example 29

### (1) Preparation of multipore film

Porous silicone film was obtained by boring commercially available polyimide "Kapton film" of 10 µm-thickness using laser radiation. The obtained film was the same as in Figure 1, a square with external size of 8 cm x 8 cm and thickness of 10 µm and the porous area (1) in the center was a square with external size of 2.2 cm x 2.2 cm and surrounded by non-porous area (2). The porous area (1) was bored with collimated pores (3) whose diameter d was 20 µm, wherein the pore disposition was the same as in Example 1 with the porosity being about 10 % and the relative standard deviation of L, the center distances between adjacent collimated pores, being 0.18.

### (2) Preparation of PEM

PEM that consisted of the porous polyimide film charged with the proton conductor Nafion polymer was prepared by submerging the multipore film of the above processing (1) into the Nafion solution and drying it. The membrane thickness was about 31 µm.

### (3) Preparation of PEFC and evaluation of the methanol type

MEA was prepared by sandwiching PEM of the above processing (2) in between the anode and the cathode prepared as in Example 5 and then by pressing with heat; and evaluation of MEA was made as in Example 1, showing the highest output power of 3.3 [mW/cm²].

### Effects of the invention

The present invention provides PEM with collimated pores of multipore film charged with a proton conductor, which is characterized in having orderly disposed collimated pores in multipore film so that PEM of the present invention are downsized, have high performance and are low cost to manufacture. The present invention provides improvement in cell performance by inhibiting methanol permeation of DMFC that uses methanol as its fuel.

In addition, the cell configuration of a side-by-side structure which arranges a plurality of cells that consist of a pair of electrodes disposed opposite each other in a single PEM, enables preparation of DMFC of a small size, high performance and low cost by using PEFC characterized in that the PEM is prepared by photolithography.

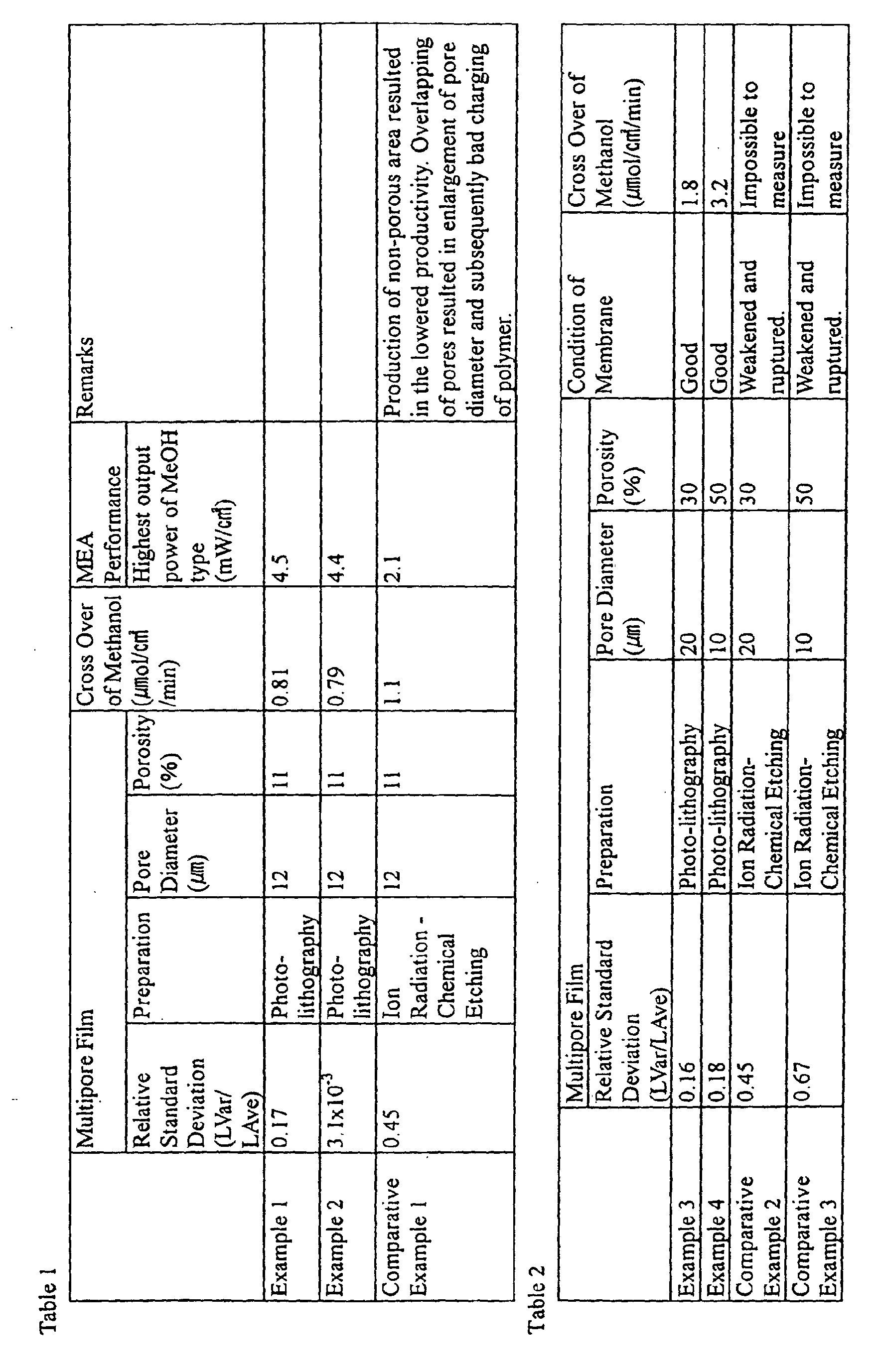

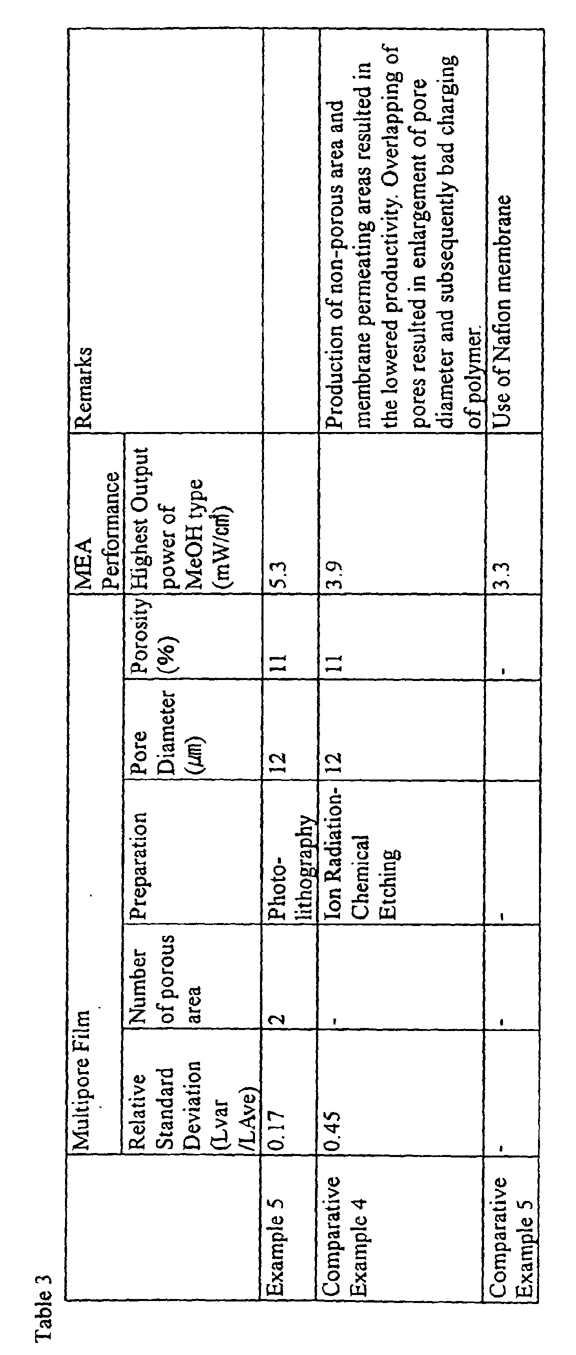

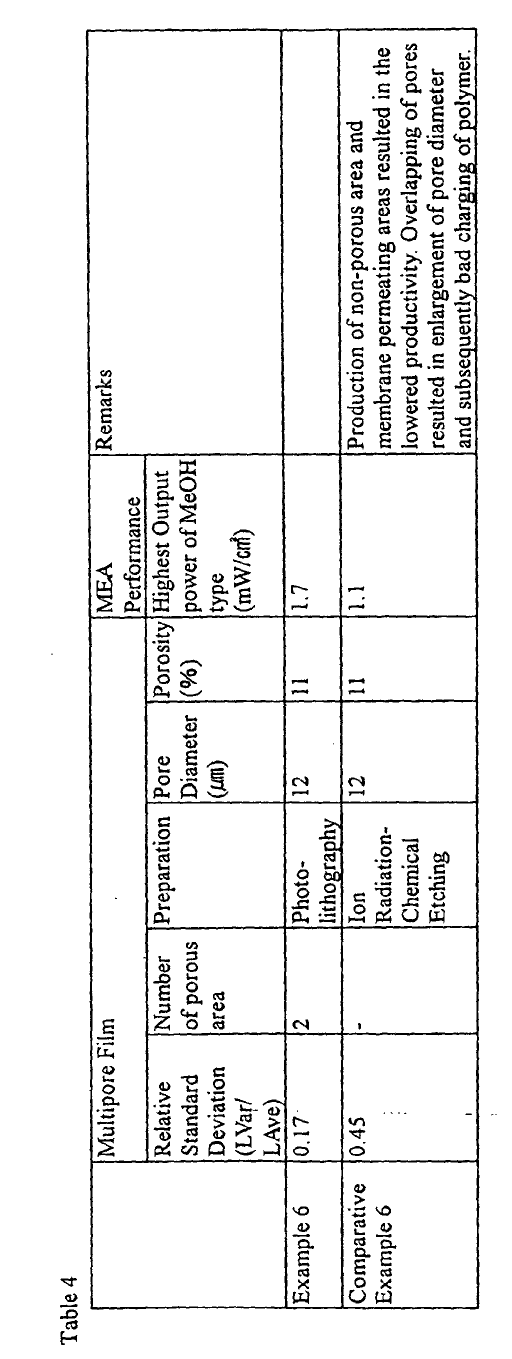

**Table 5**

| | Multipore Film | | | MEA Performance |
|---|---|---|---|---|
| | Relative Standard Deviation (LVar/LAve) | Pore Diameter(µm) | Porosity (%) | Highest Output power of MeOH type (mW/cm²) |
| Example 7 | 0.16 | 3 | 40 | 5.80 |
| Example 8 | 0.18 | 18 | 10 | 3.50 |
| Example 9 | 0.20 | 50 | 5 | 2.70 |
| Example 10 | 0.17 | 12 | 55 | 6.20 |
| Example 11 | 0.16 | 30 | 20 | 4.80 |
| Example 12 | 0.18 | 80 | 10 | 2.90 |
| Example 13 | 0.21 | 5,20,50 | 10 | 3.1 |
| Example 14 | 0.19 | 0.1 | 10 | 3.6 |

**Table 6**

| | Relative Standard Deviation (LVar/LAve)of Multipore Film | Proton Conducting Polymer | MEA Performance |
|---|---|---|---|
| | | | Highest Output power of MeOH type (mW/cm²) |
| Example 17 | 0.17 | Nafion | 2.8 |
| Example 18 | 0.17 | Sulfonated PI | 2.7 |
| Example 19 | 0.17 | Sulfonated PDPOP | 2.9 |
| Example 20 | 0.17 | Sulfonated PPSS | 2.6 |
| Example 21 | 0.17 | Nafion+ Silane Compound | 3.9 |
| Example 22 | 0.17 | Sulfonated PI+ PPSS | 2.4 |

**Table 7**

| | Multipore Film | | | PEM | MEA Performance |
|---|---|---|---|---|---|
| | Relative Standard Deviation (LVar/LAve) | Pore Diameter(µm) | Porosity (%) | | Highest Output power of MeOH type (mW/cm²) |
| Example 23 | 0.18 | 12 | 10 | Palladium sputtering treatment | 2.30 |
| Example 24 | 0.18 | 12 | 10 | Use of palladium film | 2.20 |

## Claims

1. A polymer electrolyte membrane charged with a proton conductor in the collimated pores of a polymer film equipped with a plurality of the collimated pores in the direction of the film thickness, which is **characterized in that** the relative standard deviation (LVar/LAve) is equal to or below 0.3 wherein L is the distances between centers of the adjacent collimated pores, LAve represents an average L values and LVar represent the standard deviation thereof

2. The polymer electrolyte membrane according to claim 1, wherein the LAve/LVar is equal to or below 0.1

3. The polymer electrolyte membrane according to claim 1, wherein the pore diameter of the collimated pores ranges from 0.1 to 100 µm.

4. The polymer electrolyte membrane according to claim 1, wherein porosity of the polymer film ranges from 5 to 60 %.

5. The polymer electrolyte membrane according to claim 1, wherein a porous area with the collimated pores in the polymer film is surrounded by a non-porous area which does not have collimated pores.

6. The polymer electrolyte membrane according to claim 1, wherein the collimated pores are prepared by photolithography.

7. The polymer electrolyte membrane according to claim 1, wherein the polymer film is polyimide.

8. The polymer electrolyte membrane according to claim 1, wherein the collimated pores have different pore diameters on the surface and the opposite sides.

9. A process for preparing a polymer electrolyte membrane, which is **characterized in that** a plurality of collimated pores are installed in a polymer film in the direction of the thickness using photolithography and, subsequently, are charged with a proton conductor.

10. A polymer electrolyte type fuel cell using the polymer electrolyte membrane of claim 1.

11. The polymer electrolyte type fuel cell according to Claim 10, having a side-by-side structure arranging at least two cells that consist of a pair of electrodes disposed opposite to each other in the planar direction of the single polymer electrolyte membrane.

12. The polymer electrolyte type fuel cell according to Claim 10, using liquid fuel as its fuel.

13. The polymer electrolyte type fuel cell according to Claim 12, wherein the liquid fuel is methanol.
